Europäisches Patentamt

European Patent Office

Office européen des brevets

(11) Veröffentlichungsnummer: **0 039 925**
**A1**

(12) **EUROPÄISCHE PATENTANMELDUNG**

(21) Anmeldenummer: 81103521.1

(22) Anmeldetag: 08.05.81

(51) Int. Cl.³: **B 60 P 1/04**

(30) Priorität: 09.05.80 DE 8012568 U
22.07.80 DE 3027752

(43) Veröffentlichungstag der Anmeldung:
18.11.81 Patentblatt 81.46

(84) Benannte Vertragsstaaten:
AT BE CH FR GB IT LI LU NL SE

(71) Anmelder: **Dondorff, Roman**
Industriestrasse 8
D-8501 Schwarzenbruck(DE)

(72) Erfinder: **Dondorff, Roman**
Industriestrasse 8
D-8501 Schwarzenbruck(DE)

(74) Vertreter: **Lorenz, Eduard et al,**
Widenmayerstrasse 23
D-8000 München 22(DE)

(54) Kraftfahrzeugkipper.

(57) Eine Be- und Entladeeinrichtung für Kraftfahrzeugkipper
besteht aus einer mit der hinteren Kante der Plattform (4)
gelenkig verbindbaren und auf dem Boden abstützbaren plattenförmigen Rutsche (12) und einer Zugkette (6) oder einem
anderen Zugmittel, die oder das am Fahrgestell (1) im Bereich
des vorderen Endes der Plattform (4) befestigt ist, über eine an
der Vorderseite der Plattform (4) gelagerte Rolle, Kettenrad (8)
oder Seilscheibe, die über die Oberfläche der Plattform (4)
hinausragt, zum hinteren Ende der Plattform (4) verläuft, sich
im abgesenkten Zustand der Plattform (4) über das bodenseitige Ende der Rutsche (12) erstreckt und an seinem hinteren
Ende Mittel (14) zum Anhängen von Lasten (15) aufweist. Zum
Festlegen der auf die angehobene Plattform (4) gezogenen
Last (15) ist eine Einrichtung vorgesehen.

Roman Dondorff,
8501 Schwarzenbruck,Industriestr. 8

Kraftfahrzeugkipper

Die Erfindung betrifft einen Kraftfahrzeugkipper mit einer
um eine im hinteren Bereich des Fahrgestells befindliche,
querverlaufende, horizontale Achse schwenkbar gelagerten
Plattform, die durch eine an dieser und dem Fahrgestell
angelenkte hydraulische Kolben-Zylinder-Einheit heb- und
absenkbar ausgebildet ist, und mit einer Be- und Entladeeinrichtung.

Kraftfahrzeugkipper dieser Art werden insbesondere im Bauwesen zum Transport von Schüttgütern oder dergleichen eingesetzt. Üblicherweise werden mit den Kraftfahrzeugkippern
häufig auch kleinere Baumaschinen oder andere Lasten transportiert, zu deren Absetzen auf die oder zu deren Abheben von der Plattform besondere Kräne oder Hebezeuge vorgesehen werden müssen. Steht ein Kran oder dergleichen nicht zur Verfügung, können schwerere Gegenstände, die sich von Hand nicht heben lassen, nicht transportiert werden.

Es ist bekannt, Kraftfahrzeugkipper mit fest montierten Kränen auszurüsten, um beim Be- und Entladen mit schwereren Lasten von anderen Kränen oder Hebezeugen unabhängig zu sein. Derartige Kräne verteuern das Fahrzeug nicht nur, sie erhöhen auch das mitzutransportierende Totgewicht und verringern daher die Ladekapazität.

Aufgabe der Erfindung ist es, eine nur geringe Investitionskosten verursachende Be- und Entladeeinrichtung mit geringem Gewicht für Kraftfahrzeugkipper zu schaffen.

Diese Aufgabe wird erfindungsgemäß bei einem Kraftfahrzeugkipper der eingangs angegebenen Art dadurch gelöst, daß die Be- und Entladeeinrichtung aus einer mit der hinteren Kante der Plattform gelenkig verbindbaren und auf dem Boden abstützbaren plattenförmigen Rutsche und einer Zugkette oder einem Seil besteht, die oder das am Fahrgestell im Bereich des vorderen Endes der Plattform befestigt ist, über eine an der Vorderseite der Plattform gelagerte Rolle, Kettenrad oder Seilscheibe, die bis über die Oberfläche der Plattform hinausragt, zum hinteren Ende der Plattform verläuft, sich im abgesenkten Zustand der Plattform über das bodenseitige Ende der Rutsche erstreckt und an seinem hinteren Ende Mittel zum Anhängen von Lasten aufweist, und daß eine Einrichtung zum Festlegen der auf die angehobene Plattform gezogenen Last vorgesehen ist. Die erfindungsgemäße Be- und Entladeeinrichtung läßt sich nur mit geringem Aufwand an einem Kraftfahrzeugkipper installieren, da in der einfachsten Ausführungsform lediglich eine Kette
oder ein Seil und ein Kettenrad und eine Seilscheibe erforderlich sind. Zum Beladen eines mit der erfindungsgemäßen Be- und
Entladeeinrichtung ausgestatteten Kraftfahrzeugkippers ist es
lediglich erforderlich, das Kraftfahrzeug in der Weise hinter
den zu verladenden Gegenstand zu fahren, daß die bodenseitige
Kante der an die Plattform angehängten Rutsche vor dem Gegenstand liegt. Nachdem die Kette oder das Seil über die Plattform
und die Rutsche herabgezogen und mit dem hinteren Ende mit der
Last verbunden worden ist, braucht über die Kipperhydraulik
nur die Plattform angehoben zu werden, so daß die Kette oder
das Seil mit der angehängten Last über die Rutsche auf die
Plattform gezogen wird. Die auf die in ihrer angehobenen Stellung
befindliche Plattform gezogene Last wird sodann durch das Zugmittel oder in sonstiger Weise auf der Plattform festgehalten,
so daß sich diese absenken läßt, ohne daß die Last wieder abrutscht.

Sollen Gegenstände verladen werden, die keine geeigneten Gleitflächen aufweisen, können diese auf mit Gleitflächen versehene
Paletten, Container oder dergleichen abgesetzt werden.

In weiterer Ausgestaltung der Erfindung ist vorgesehen, daß
das vordere Ende der Kette oder des sonstigen Zugmittels an
der Plattform befestigt ist und diese oder dieses über eine
an dem Fahrgestell gelagerte Rolle, Kettenrad oder Seilscheibe
zu der an der Plattform gelagerten Rolle, Kettenrad oder Seilscheibe geführt ist. Diese flaschenzugartige Führung des Zugmittels hat zur Folge, daß sich allerdings bei Halbierung der
zur Verfügung stehenden Zugkraft der Zugweg verdoppeln läßt.

Um die auf die angehobene Plattform gezogene Last auf dieser
sichern zu können, ist zweckmäßigerweise eine Einrichtung zum Arretieren der Kette oder des Zugmittels im Bereich der an der Plattform gelagerten Rolle, Kette oder Seilscheibe vorgesehen.

Da beim Absenken der Plattform der vor dieser befindliche Teil des Zugmittels schlaff wird, ist zweckmäßigerweise eine Einrichtung zur Aufnahme des beim Absenken der Plattform frei werdenden Seil- oder Kettentrums vorgesehen.

Zur Aufnahme des frei werdenden Seil- oder Kettentrums kann eine dieses aufrollende Trommel vorgesehen werden.

In weiterer Ausgestaltung der Erfindung ist die Trommel mit einer Rücklaufsperre versehen.

Nach einer erfinderischen Weiterbildung ist vorgesehen, daß die an der Plattform gelagerte Rolle, Seilscheibe oder das Kettenrad mit einer Rücklaufsperre versehen ist. Mit dieser Ausgestaltung der erfindungsgemäßen Vorrichtung läßt sich die Beladung durch eine pumpende Bewegung der Plattform ausführen, ohne daß diese in eine relativ steil ausgeschwenkte Lage verfahren werden müßte.

Die Entladung vollzieht sich in entsprechend umgekehrter Weise. Nachdem die Plattform in ihre angehobene Stellung verfahren worden ist, wird die Sicherung der Last oder die Arretierung des Zugmittels gelöst, so daß beim Absenken der Plattform mittels der Kipperhydraulik die Last langsam über die Plattform und die Rutsche abwärts gleitet.

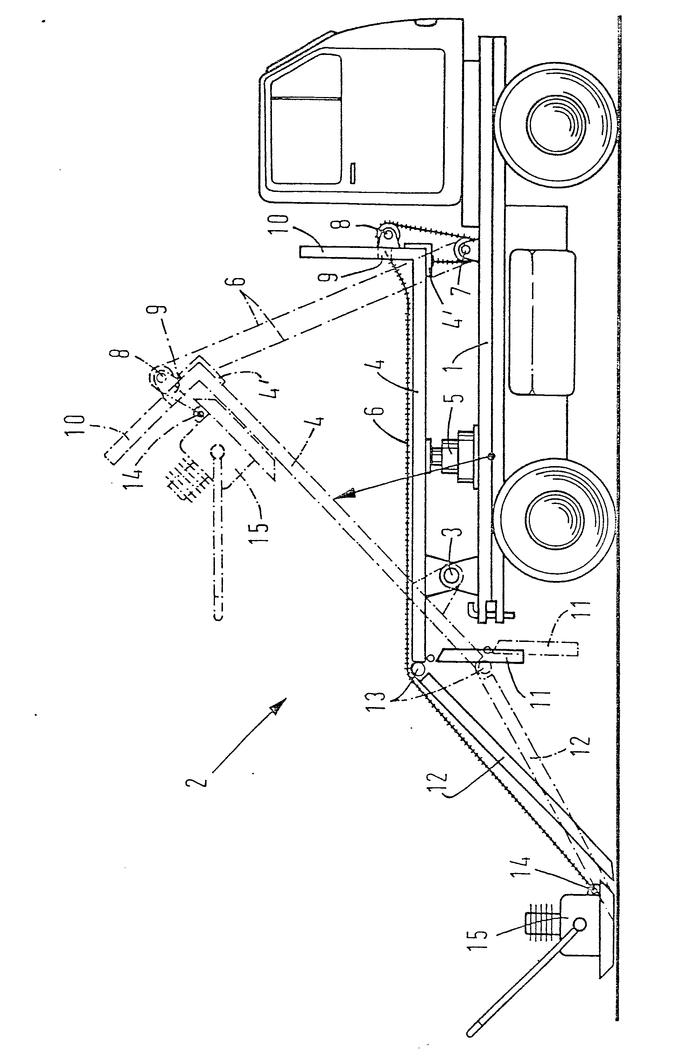

Ein Ausführungsbeispiel der Erfindung wird nachstehend anhand der Zeichnung, in deren einziger Figur eine schematische Seitenansicht des Kraftfahrzeugkippers dargestellt ist, näher erläutert Im hinteren Bereich des Fahrgestells 1 des Kraftfahrzeugkippers 2 ist um die Schwenkachse 3 die Plattform 4 schwenkbar gelagert. Die Plattform 4 ist durch die Kipperhydraulik 5 heb- und absenkbar. Soweit ist der Kraftfahrzeugkipper 2 von bekannter Bauweise, die näher nicht beschrieben zu werden braucht.

An dem vorderen Ende der Plattform 4 ist ein Beschlag 4' oder dergleichen vorgesehen, an dem das vordere Ende der Zugkette 6 befestigt ist. Die Zugkette 6 ist über das auf dem Fahrgestell 1 gelagerte Kettenrad 7 und das an der Vorderseite der Plattform 4 gelagerte Kettenrad 8 geführt und verläuft durch eine Öffnung 9 in der vorderen Begrenzungswand 10 der Plattform 4 zu deren hinterem Ende.

Nach Abklappen der hinteren Begrenzungswand 11 wird die plattenförmige Rutsche 12 mit ihrem vorderen Ende gelenkig an die am hinteren Ende der Plattform 4 befestigte Achse 13 eingehängt. Das hintere Ende der Zugkette 6, das mit einem Haken 14 oder dergleichen versehen ist, wird an die zu verladende Last 15, im dargestellten Ausführungsbeispiel ein Rüttelverdichter, angehängt.

Das Kettenrad 8 kann mit einer Arretierungseinrichtung und/oder mit einer Ablaßbremse versehen sein.

Der Beladevorgang vollzieht sich folgendermaßen: Der Kraftfahrzeugkipper 2 wird rückwärts an die zu verladende Last herangefahren. Anschließend wird die hintere Bordwand 12 der Ladeplattform 4 heruntergeklappt und die Rutsche 12 auf die Achse 13 eingehängt. Die Zugkette 6 wird über die Kettenräder 7, 8 nach hinten gelegt und an die zu verladende Last 15 angehängt. Anschließend wird in üblichem Kipperbetrieb die Plattform 4 in die gestrichelte Lage nach oben verschwenkt. Während des
Verschwenkens zieht die Kette die Last 15 auf die Plattform 4.
Der von der Last zurückgelegte Weg entspricht der doppelten
Länge des von dem vorderen Ende der Plattform zurückgelegten
Hubweges. Hat die Last die gewünschte Position auf der angehobenen Plattform erreicht, erfolgt eine Arretierung der Zugkette
durch das Kettenrad 8 oder in sonstiger Weise. Anschließend
wird die Plattform 4 in üblicher Weise angesenkt. Die Last
wird auf der Plattform 4 gesichert und die Rutsche 12 verladen.

Zum Entladen wird die Rutsche 12 erneut eingehängt und die
Plattform 4 in ihre gehobene Stellung verfahren.Nach dem Entsichern der Kette 6 wird die Plattform wieder langsam abgesenkt,
so daß die Last entsprechend der Länge der dadurch frei werdenden Kette über die Plattform und die Rutsche 12 unter ihrem
Eigengewicht herabgleitet.

Roman Dondorff,
8501 Schwarzenbruck, Industriestr. 8

Kraftfahrzeugkipper

P a t e n t a n s p r ü c h e :

1. Kraftfahrzeugkipper mit einer um eine im hinteren Bereich des Fahrgestells befindliche, quer verlaufende, horizontale Achse schwenkbar gelagerten Plattform, die durch eine an dieser und dem Fahrgestell angelenkte hydraulische Kolben- Zylinder-Einheit heb- und absenkbar ausgebildet ist, und mit einer Be- und Entladeeinrichtung, dadurch gekennzeichnet, daß die Be- und Entladeeinrichtung aus einer mit der hinteren Kante der Plattform (4) gelenkig verbindbaren und auf dem Boden abstützbaren plattenförmigen Rutsche (12) und einer Zugkette (6) oder einem anderen Zugmittel besteht, die oder das am Fahrgestell (1) im Bereich des vorderen Endes der Plattform (4) befestigt ist, über eine an der Vorderseite der Plattform (4) gelagerte Rolle, Kettenrad (8) oder Seilscheibe, die über
die Oberfläche der Plattform (4) hinausragt, zum hinteren
Ende der Plattform (4) verläuft, sich im abgesenkten Zustand
der Plattform (4) über das bodenseitige Ende der Rutsche
(12) erstreckt und an seinem hinteren Ende Mittel (14)
zum Anhängen von Lasten (15) aufweist, und daß eine Einrichtung zum Festlegen der auf die angehobene Plattform (4)
gezogenen Last (15) vorgesehen ist.

2. Kraftfahrzeugkipper nach Anspruch 1, dadurch gekennzeichnet,
daß das vordere Ende der Kette (4) oder des Zugmittels an
der Plattform (4) befestigt ist und diese oder dieses über
eine an dem Fahrgestell (1) gelagerte Rolle, Kettenrad (7)
oder Seilscheibe zu der an der Plattform (4) gelagerten
Rolle, Kettenrad (8) oder Seilscheibe geführt ist.

3. Kraftfahrzeugkipper nach Anspruch 1 oder 2, dadurch gekennzeichnet, daß eine Einrichtung zum Arretieren der Kette
(6) oder des Zugmittels im Bereich der an der Plattform
(4) gelagerten Rolle, Kettenrad (8) oder Seilscheibe vorgesehen ist.

4. Kraftfahrzeugkipper nach einem der Ansprüche 1 bis 3,
dadurch gekennzeichnet, daß eine Einrichtung zur Aufnahme
des beim Absenken der Plattform (4) frei werdenden Zugmittel- oder Kettentrums vorgesehen ist.

5. Kraftfahrzeugkipper nach Anspruch 4, dadurch gekennzeichnet,
daß zur Aufnahme des frei werdenden Zugmittel- oder Kettentrums eine dieses aufrollende Trommel vorgesehen ist.

- 3 -

0039925

6. Kraftfahrzeugkipper nach Anspruch 5, dadurch gekennzeichnet, daß die Trommel mit einer Rücklaufsperre versehen
   ist.

7. Kraftfahrzeugkipper nach einem der Ansprüche 1 bis 6,
   dadurch gekennzeichnet, daß die an der Plattform (4)
   gelagerte Rolle, Kettenrad (8) oder Seilscheibe mit einer
   Rücklaufsperre versehen ist.

0039925

Europäisches
Patentamt

**EUROPÄISCHER RECHERCHENBERICHT**

0039925

Nummer der Anmeldung

EP 81 10 3521.1

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| X | DE - C - 804 779 (WEGMANN & CO.) <br> * Anspruch 2; Fig. 1, 2 * <br> -- | 1,4,5 | B 60 P 1/04 |
| X | CH - A - 351 506 (TRÖSCH) <br> * Fig. 1 bis 4 * <br> -- | 1,2,4 | |
| | US - A - 2 867 339 (NELSON) <br> * Fig. 5, 7 * <br> -- | 4,5 | |
| | DE - C - 1 028 454 (LEULIER) <br> * Fig. 2 * <br> ---- | 6 | RECHERCHIERTE SACHGEBIETE (Int. Cl.³) <br><br> B 60 P 1/00 |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 01-07-1981 | LUDWIG |

EPA form 1503.1 06.78